# EUROPEAN PATENT APPLICATION

(11) **EP 2 276 233 A1**
(43) Date of publication of application: **19.01.2011**
(21) Application number: 10168114.6
(22) Date of filing: 01.07.2010
(51) Int. Cl.: H04N 5/225

(54) **Photographing module**

(30) Priority: 01.07.2009 KR 20090059769
(71) Applicant: Samsung Techwin Co., Ltd, Changwon-City Kyongsangnam-do (KR)
(72) Inventor: Hwang, San-deok, Changwon-city (KR)
(74) Representative: Frost, Alex John

(57) **Abstract**

A photographing module is provided. The photographing module includes a lens unit including at least one lens; an imaging device which converts image light, transmitted through the lens unit, into an electrical signal; and a signal transmission member including a plurality of lead units which transmit the electrical signal to an outside, and a mold unit in which a groove which accommodates at least a portion of the imaging device is formed. At least one of the lead units includes a first lead terminal which is exposed at an inner portion of the groove and electrically connected to a terminal of the imaging device; a second lead terminal which has a different height from the first lead terminal and is exposed outside the signal transmission member; and a connection portion which connects the first lead terminal to the second lead terminal.

## Description

### CROSS-REFERENCE TO RELATED PATENT APPLICATION

This application claims priority from Korean Patent Application No. 10-2009-0059769, filed on July 1, 2009, the disclosure of which is incorporated herein in its entirety by reference.

### BACKGROUND

### 1. Field

Apparatuses and methods consistent with exemplary embodiments relate to a photographing module, and more particularly, to a photographing module including a signal transmission member electrically connected to an imaging device.

### 2. Description of the Related Art

Photographing apparatuses such as digital still cameras and digital video cameras are currently popular.

In particular, photographing modules are commonly used in communication devices such as mobile phones as well as photographing apparatuses such as cameras, thereby satisfying various demands of users.

A photographing module includes a lens unit including lenses, and an imaging device for converting image light into an electrical signal, such as, a charge coupled device (CCD). As electronic devices using photographing modules are getting slimmer and smaller, simple and small photographing modules are required.

Also, due to rapidly increased demands for photographing modules, an easily mass-producible photographing module is highly demanded.

Accordingly, development of an easily mass-producible photographing module having a simple structure is required.

### SUMMARY

One or more exemplary embodiments provide an easily manufacturable photographing module having a simple structure.

According to an aspect of an exemplary embodiment, there is provided a photographing module including a lens unit including at least one lens; an imaging device which converts image light, transmitted through the lens unit, into an electrical signal; and a signal transmission member including a plurality of lead units which transmit the electrical signal to an outside, and a mold unit in which a groove which accommodates at least a portion of the imaging device is formed, wherein at least one of the plurality of lead units includes a first lead terminal which is exposed at an inner portion of the groove and electrically connected to a terminal of the imaging device; a second lead terminal which has a different height from the first lead terminal and is exposed outside the signal transmission member; and a connection portion which connects the first lead terminal to the second lead terminal.

The mold unit may include an opening through which the image light is passed to reach a light receiving surface of the imaging device.

A depth of the groove may be greater than a thickness of the imaging device.

A first bump may be formed on the first lead terminal and may be electrically connected to the terminal of the imaging device.

A second bump may be formed on the second lead terminal to be connected to the outside.

The connection portion may have an inclined shape.

The photographing module may further include a frame in which the lens unit is accommodated and on which the signal transmission member is mounted.

The photographing module may further include an iris unit.

The photographing module may further include a spacer between the lens unit and the signal transmission member.

The connection portion may be buried in the mold unit.

### BRIEF DESCRIPTION OF THE DRAWINGS

The above and other aspects will become more apparent by describing in detail exemplary embodiments with reference to the attached drawings, in which:

FIG. 1 is a top perspective view of a photographing module according to an exemplary embodiment;

FIG. 2 is a cross-sectional view taken along a line II - II illustrated in FIG. 1, according to an exemplary embodiment;

FIG. 3 is a bottom perspective view of the photographing module illustrated in FIG. 1, according to an exemplary embodiment;

FIG. 4 is an exploded perspective view of the photographing module illustrated in FIG. 1, according to an exemplary embodiment; and

FIG. 5 is a bottom perspective view of a signal transmission member included in the photographing module illustrated in FIG. 1, according to an exemplary embodiment.

### DETAILED DESCRIPTION OF EXEMPLARY EMBODIMENTS

Hereinafter, exemplary embodiments will be described in detail with reference to the attached drawings.

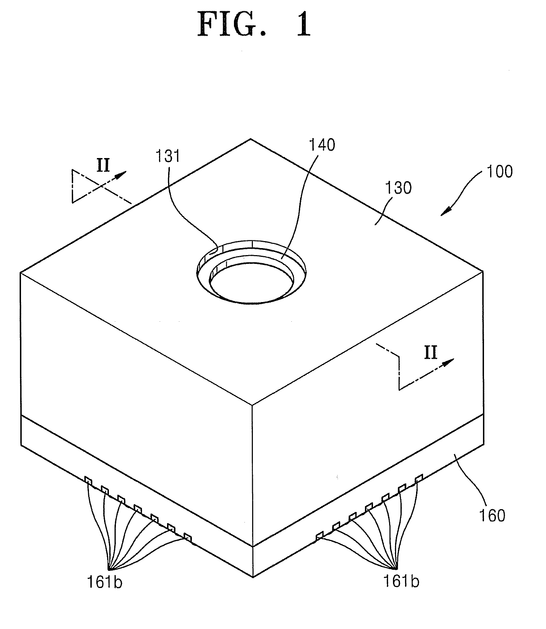

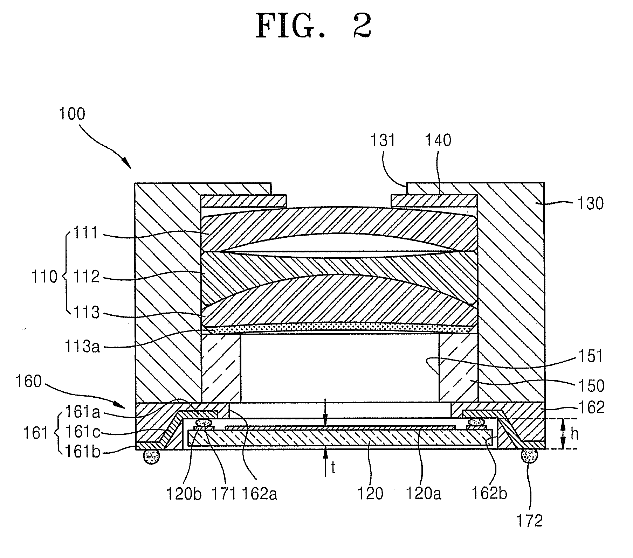

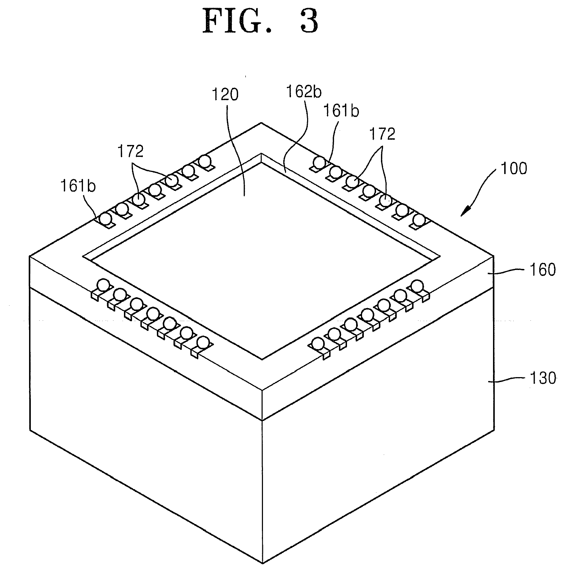

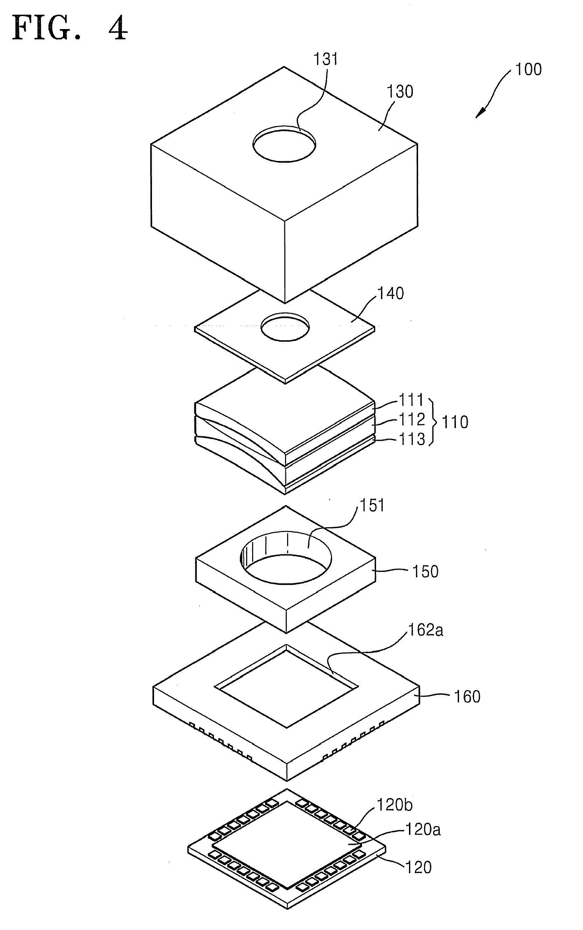

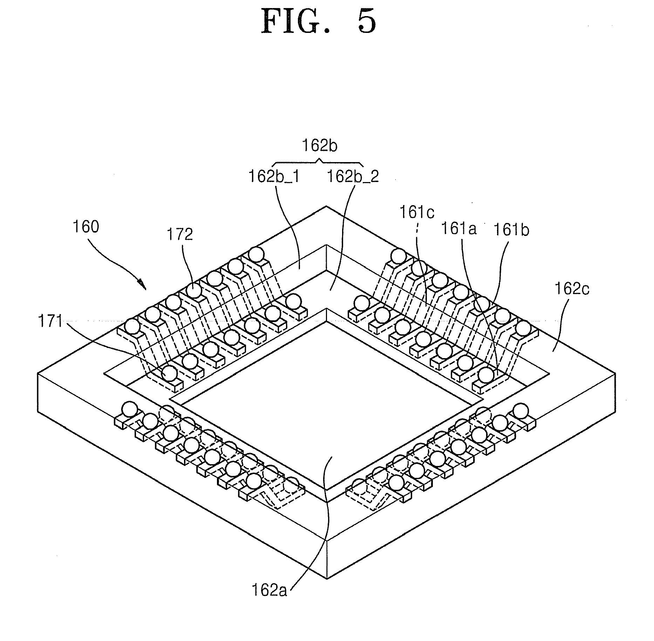

FIG. 1 is a top perspective view of a photographing module 100 according to an exemplary embodiment. FIG. 2 is a cross-sectional view taken along a line II - II illustrated in FIG. 1, according to an exemplary embodiment. FIG. 3 is a bottom perspective view of the photographing module 100 illustrated in FIG. 1, according to an exemplary embodiment. FIG. 4 is an exploded perspective view of the photographing module 100 illustrated in FIG. 1, according to an exemplary embodiment. FIG. 5 is a bottom perspective view of a signal transmission member 160 included in the photographing module 100 illustrated in FIG. 1, according to an exemplary embodiment.

As illustrated in FIGS. 1 through 5, the photographing module 100 includes a lens unit 110, an imaging device 120, a frame 130, an iris unit 140, a spacer 150, and the signal transmission member 160.

The lens unit 110 transmits image light of a subject, and includes one or more lenses 111, 112 and 113. A thin filter layer 113a for blocking infrared light is formed on the lens 113 by using, for example, a coating method.

Although the filter layer 113a is formed on the lens 113 instead of disposing a filter in the direction of an optical axis of the lens unit 110, according to the current exemplary embodiment, the present inventive concept is not limited thereto. The photographing module 100 may further include filters in the form of thin films or glass plates, in addition to the lenses 111, 112, and 113. In that case, the included filters may be various filters such as an infrared light blocking filter, an ultraviolet light blocking filter, and a color correction filter.

The image light transmitted through the lens unit 110 forms an image on a light receiving surface 120a of the imaging device 120, and a complementary metal oxide semiconductor (CMOS) device is used as the imaging device 120.

Although a CMOS device is used as the imaging device 120, according to the current exemplary embodiment, the present inventive concept is not limited thereto. For example, a charge coupled device (CCD) or another image sensor may be used as the imaging device 120. Here, if a CMOS device is used, the image light of the subject may be converted into an electrical signal at a higher speed in comparison to a CCD, and thus, a time taken to photograph the subject may be reduced.

Terminals 120b for electrical connection with the signal transmission member 160 are formed on an upper surface of the imaging device 120.

The frame 130 has a hollow inside and functions as a barrel in which the lens unit 110 is accommodated.

An upper surface of the frame 130 has a hole 131 through which the image light is passed, and a lower surface of the frame 130 is open for an assembling process.

Also, in addition to the lens unit 110, the iris unit 140 and the spacer 150 are accommodated in the frame 130, and the signal transmission member 160 is mounted on the frame 130.

The iris unit 140 adjusts the amount of the image light to be incident on the imaging device 120 when the subject is photographed, and is disposed above the lens unit 110.

Although the iris unit 140 is disposed above the lens unit 110, according to the current exemplary embodiment, the present inventive concept is not limited thereto. The iris unit 140 may be disposed anywhere as long as the amount of the image light to be incident on the imaging device 120 is adjustable. For example, the iris unit 140 may be disposed under the lens unit 110.

The spacer 150 is disposed under the lens unit 110 to provide a predetermined distance between the lens unit 110 and the imaging device 120 in order to adjust a focus.

The spacer 150 has a hole 151 through which the image light is passed.

The signal transmission member 160 for electrical connection between the imaging device 120 and an external circuit (not shown) is mounted under the frame 130.

The signal transmission member 160 includes a plurality of lead units 161 and a mold unit 162.

The lead units 161 are separate from each other by a predetermined distance and are formed of a conductive material such as copper (Cu) in order to transmit electrical signals.

Each of the lead units 161 includes a first lead terminal 161a, a second lead terminal 161b, and a connection portion 161c. Positions of the first lead terminal 161a, the second lead terminal 161b, and the connection portion 161c are related to the structure of the mold unit 162, and thus, will be described later in detail after the structure of the mold unit 162 is described.

The mold unit 162 is formed of a non-conductive material, e.g., epoxy, to bury the lead units 161. An opening 162a through which the image light is passed is formed at the center of the mold unit 162, and a groove 162b is formed in a lower surface of the mold unit 162.

As illustrated in FIG. 2, the groove 162b is formed to accommodate the imaging device 120, and thus, has a larger size than that of the imaging device 120.

Also, in order to sufficiently accommodate the imaging device 120 in the groove 162b, a depth h of the groove 162b is greater than a thickness t of the imaging device 120.

As illustrated in FIG. 5, the groove 162b includes a side part 162b_1 formed in a depth direction of the groove 162b, and a mounting part 162b_2 for mounting the imaging device 120.

The first lead terminals 161 a of the lead units 161 are exposed on the mounting part 162b_2. As such, the first lead terminals 161a are electrically connected to the terminals 120b of the imaging device 120.

The second lead terminals 161b of the lead units 161 are exposed on an edge part 162c of the mold unit 162. As such, the second lead terminals 161 b are exposed outside the signal transmission member 160 to be electrically connected to the external circuit.

There is a difference in height between the first and second lead terminals 161a and 161b. This is because the first lead terminals 161a are disposed in the mounting part 162b_2 on which the imaging device 120 is mounted, and the second lead terminals 161b are disposed in the edge part 162c of the mold unit 162.

The connection portions 161 c of the lead units 161 electrically connect the first lead terminals 161a to the second lead terminals 161b, and are buried in the mold unit 162.

The connection portions 161c have an inclined shape because there is a different in height between the first and second lead terminals 161a and 161b, and the second lead terminals 161b are formed at outer sides of the mold unit 162 in comparison to the first lead terminals 161 a.

The first lead terminals 161a are electrically connected to the terminals 120b of the imaging device 120 by using first bumps 171. In more detail, the first bumps 171 are arranged on the first lead terminals 161 a, and then, are heated to bond the first lead terminals 161a to the terminals 120b of the imaging device 120.

Second bumps 172 are arranged on the second lead terminals 161b to be connected to the external circuit. In more detail, the second bumps 172 are arranged on the second lead terminals 161b, and then, are heated to bond the second lead terminals 161 b to terminals (not shown) of the external circuit.

The first and second bumps 171 and 172 are formed of an electrically conductive material such as an alloy of lead (Pb) and tin (Sn) or leadless solder.

A manufacturing process of the photographing module 100 will now be described.

Initially, the signal transmission member 160 is manufactured as described below.

The lead units 161 may be easily formed by using a related art lead frame, and the mold unit 162 may also be easily formed by using a related art molding method using mold resin, as described below.

The lead units 161 including the first lead terminals 161a, the second lead terminals 161b, and the connection portions 161c are formed by pressing and down-setting leads of a related art lead frame. Then, the mold unit 162 in which the lead units 161 are buried is formed by removing a die pad from the lead frame, and then, molding mold resin. In this case, the mold unit 162 may include the opening 162a and the groove 162b as illustrated in FIG. 5.

Although pressing and molding operations are performed by using a related art lead frame in order to form the lead units 161 and the mold unit 162, according to the current exemplary embodiment, the present inventive concept is not limited thereto. The lead units 161 may be formed by performing a different operation. For example, the lead units 161 and the mold unit 162 may be manufactured by making individual pieces of the lead units 161 into a final form via tape, and then, molding mold resin.

Then, the first bumps 171 are formed on the first lead terminals 161a, and the second bumps 172 are formed on the second lead terminals 161b. After that, the first bumps 171 are heated and bonded to the terminals 120b of the imaging device 120 so that the first lead terminals 161a are electrically connected to the imaging device 120 and the imaging device 120 is accommodated in the signal transmission member 160.

After the signal transmission member 160 is manufactured as described above, the photographing module 100 is assembled as described below.

The iris unit 140, the lens unit 110, the spacer 150, and the signal transmission member 160 are prepared, and then, the iris unit 140, the lens unit 110, and the spacer 150 are sequentially accommodated in the frame 130.

Then, the signal transmission member 160 is mounted under the frame 130, thereby completely assembling the photographing module 100. In this case, the signal transmission member 160 is bonded to the frame 130 by using, for example, an adhesive.

After that, the second lead terminals 161b of the signal transmission member 160 are bonded to the external circuit by using the second bumps 172.

The manufacturing and assembling processes of the photographing module 100 are not limited as described above. If necessary, the order of some operations may be changed and an additional operation may be performed.

According to the current exemplary embodiment, as the mold unit 162 is formed to bury the lead units 161 and the imaging device 120 is accommodated in the groove 162b of the mold unit 162, the structure of the signal transmission member 160 may be simplified, the volume of the photographing module 100 may be reduced, and the number of manufacturing and assembling steps of the photographing module 100 may be reduced.

Also, when the signal transmission member 160 is formed, the lead units 161 and the mold unit 162 may be formed by pressing and down-setting a related art lead frame, and then, molding mold resin. As such, a plurality of photographing modules 100 may be manufactured at the same time, and thus, the number of manufacturing steps and manufacturing costs may be reduced.

The photographing module 100 may be used in portable electronic devices such as mobile phones having a photographing function, portable multimedia players (PMPs), electronic dictionaries, electronic schedulers, vehicle navigators, compact notebook computers, etc..

As described above, a photographing module having a simple structure may be easily manufactured.

While the exemplary embodiments have been shown and described, it will be understood by those of ordinary skill in the art that various changes in form and details may be made therein without departing from the spirit and scope of the inventive concept as defined by the following claims.

## Claims

1. A photographing module comprising:
a lens unit comprising at least one lens;
an imaging device which converts image light, transmitted through the lens unit, into an electrical signal; and
a signal transmission member comprising:
a plurality of lead units which transmit the electrical signal to an outside; and
a mold unit in which a groove which accommodates at least a portion of the imaging device is formed,
wherein at least one of the plurality of lead units comprises:
a first lead terminal which is exposed at an inner portion of the groove and electrically connected to a terminal of the imaging device;
a second lead terminal which has a different height from the first lead terminal and is exposed outside the signal transmission member; and
a connection portion which connects the first lead terminal to the second lead terminal.

2. The photographing module of claim 1, wherein the mold unit comprises an opening through which the image light is passed to reach a light receiving surface of the imaging device.

3. The photographing module of claim 1, wherein a depth of the groove is greater than a thickness of the imaging device.

4. The photographing module of claim 1, wherein further comprising a first bump formed on the first lead terminal and electrically connected to the terminal of the imaging device.

5. The photographing module of claim 1, wherein further comprising a second bump formed on the second lead terminal to be connected to the outside.

6. The photographing module of claim 1, wherein the connection portion comprises an inclined shape.

7. The photographing module of claim 1, further comprising a frame in which the lens unit is accommodated and on which the signal transmission member is mounted.

8. The photographing module of claim 1, further comprising an iris unit.

9. The photographing module of claim 1, further comprising a spacer between the lens unit and the signal transmission member.

10. The photographing module of claim 1, wherein the connection portion is buried in the mold unit.
